# EUROPÄISCHE PATENTSCHRIFT

(11) **EP 1 232 911 B1**
(45) Veröffentlichungstag und Bekanntmachung des Hinweises auf die Patenterteilung: **16.11.2005**
(21) Anmeldenummer: 02001364.5
(22) Anmeldetag: 19.01.2002
(51) Int. Cl.: B60R 7/04, B60R 7/08, B60R 11/00

(54) **Innenausstattungsvorrichtung für ein Fahrzeug**
Interior fitting for vehicles
Agencement intérieur pour véhicules

(30) Priorität: 16.02.2001 DE 10107286
(43) Veröffentlichungstag der Anmeldung: 21.08.2002
(73) Patentinhaber: Dr.Ing. h.c.F. Porsche Aktiengesellschaft, 70435 Stuttgart (DE)
(72) Erfinder: Plate, Horst, 71272 Renningen (DE)

(56) Entgegenhaltungen:
- EP-A- 0 937 607
- PATENT ABSTRACTS OF JAPAN vol. 1996, no. 12, 26. Dezember 1996 (1996-12-26) & JP 08 198016 A (MITSUBISHI AUTOMOB ENG CO LTD;MITSUBISHI MOTORS CORP), 6. August 1996 (1996-08-06)
- PATENT ABSTRACTS OF JAPAN vol. 1999, no. 13, 30. November 1999 (1999-11-30) & JP 11 227529 A (KASAI KOGYO CO LTD), 24. August 1999 (1999-08-24)

## Beschreibung

Die Erfindung bezieht sich auf eine Innenausstattungsvorrichtung für ein Fahrzeug, gemäß Oberbegriff des Anspruchs 1.

Eine gattungsgemäße Innenausstattungsvorrichtung für ein Fahrzeug, insbesondere Kraftfahrzeug, ist der JP-A-08 198 016 zu entnehmen. Eine weitere Innenausstattungsvorrichtung zeigt die JP 10-217 860 A. Sie ist in einem Fahrgastraum angeordnet und weist mehrere aneinander angrenzende Innenausstattungsteile auf, die beispielsweise durch ein Mittelteil einer Armaturentafel und durch ein daran angrenzendes Verkleidungsteil der Armaturentafel gebildet sind. In dem Mittelteil ist ein eine Einführöffnung aufweisendes Aufnahmeelement mit einem Aufnahmeraum für zumindest einen flächigen Gegenstand, insbesondere eine Karte, wie z. B. eine Tankkarte, ein Parkschein oder dgl. angeordnet. Hierfür ist in das Mittelteil eine Ausnehmung eingebracht, in die das kastenförmige Aufnahmeelement für den flächigen Gegenstand eingesetzt wird. Das Aufnahmeelement benötigt in dem für den Fahrer in Griffreichweite liegenden Mittelteil der Armaturentafel Einbauraum, der für andere Funktions- oder Bedienelemente nicht mehr zur Verfügung steht.

Es ist daher Aufgabe der Erfindung, eine Innenausstattungsvorrichtung der eingangs genannten Art zu schaffen, in die ein Aufnahmeraum für einen flächigen Gegenstand einfach integriert werden kann, ohne in einem Innenausstattungsteil Einbauraum zu benötigen.

Gelöst wird diese Aufgabe mit einer Innenausstattungsvorrichtung, die die in Anspruch 1 genannten Merkmale aufweist. Weitere, die Erfindung vorteilhaft ausgestaltenden Weiterbildungen sind in den Unteransprüchen angegeben.

Die mit der Erfindung hauptsächlich erzielten Vorteile sind darin zu sehen, dass der Aufnahmeraum für den flächigen Gegenstand in dem zwischen den zwei Innenausstattungsteilen vorhandenen Spalt bereitgestellt werden kann, dessen Spaltbreite wegen der geringen Dicke des flächigen Gegenstandes ausreichend für diesen flächigen Gegenstand ist. Ohne Einbauraum in einem der Innenausstattungsteile zu beanspruchen, kann der Aufnahmeraum dennoch in Griffreichweite des Fahrers oder eines anderen Insassen angeordnet werden. Außerdem ergeben sich geringere Herstellung- und Werkzeugkosten für die Innenausstattungsvorrichtung, da keine separate Ausnehmung für den Aufnahmeraum in eines der Innenausstattungsteile eingebracht werden muss.

Weiterhin ist es vorteilhaft, dass der flächige Gegenstand in dem Aufnahmeraum sicher gehalten ist.

Bei einer in Anspruch 3 angegebenen Ausgestaltung ist es vorteilhaft möglich, flächige Gegenstände - auch mit unterschiedlicher Dicke - sicher in dem Aufnahmeraum zu halten.

Gemäß einer in Anspruch 8 angegebenen Weiterbildung der Erfindung wird besonders günstig erreicht, dass der Fahrer des Fahrzeugs beim Verlassen desselben auf den in den Aufnahmeraum eingesteckten Gegenstand aufmerksam wird und so ein ungewolltes Zurücklassen des Gegenstandes im Fahrzeug vermieden wird.

Die Erfindung wird nachfolgend anhand von Ausführungsbeispielen mit Bezug auf die Zeichnung näher erläutert.

Es zeigen
- Fig. 1: ein erstes Ausführungsbeispiel einer Innenausstattungsvorrichtung mit einem Aufnahmeraum für einen flächigen Gegenstand,
- Fig. 2: ein zweites Ausführungsbeispiel einer Innenausstattungsvorrichtung,
- Fig. 3: die Innenausstattungsvorrichtung gemäß Fig. 2 in Schnittdarstellung entlang der Linie III-III,
- Fig. 4: ein drittes Ausführungsbeispiel einer Innenausstattungsvorrichtung und
- Fig. 5: ein Aufnahmeelement mit einem Aufnahmeraum für einen flächigen Gegenstand.

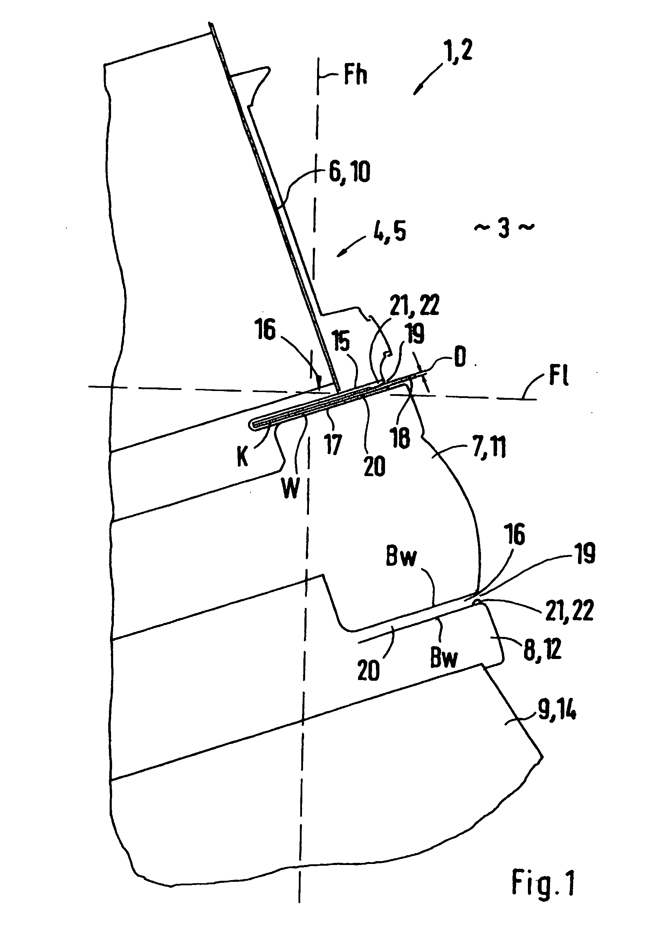

Fig. 1 zeigt teilweise in Schnittdarstellung ein Mittelteil 1 einer Armaturentafel 2 eines Fahrzeugs, insbesondere Personenkraftwagen. In der Schnittebene liegen die Fahrzeughochachse Fh und die Fahrzeuglängsachse FI. Die Armaturentafel 2 ist in einem Fahrgastraum 3 des Fahrzeugs angeordnet und ist somit Bestandteil der Innenausstattung 4, die mithin wenigstens eine Innenausstattungsvorrichtung 5 aufweist, die - gemäß Fig. 1 - durch das Mittelteil 1 gebildet werden kann. Die Innenausstattungsvorrichtung 5 umfasst mindestens zwei aneinander angrenzende Innenausstattungsteile 6 und 7, die nebeneinander oder übereinander angeordnet sein können und im Ausführungsbeispiel Komponenten des Mittelteils 1 bilden. Je nach Ausstattung des Fahrzeugs können weitere Innenausstattungsteile 8 und/oder 9 vorgesehen sein, die neben, über oder unter den übrigen Innenausstattungsteilen 6 bzw. 7 angeordnet sein können.

Die Innenausstattungsteile 6 bis 9 können Sicherheits- oder Funktionsmodule, Verkleidungs- oder Betätigungselemente, wie z. B. Schalter oder dgl., Ablagefächer, Stauräume oder sonstige Innenausstattungskomponenten sein.

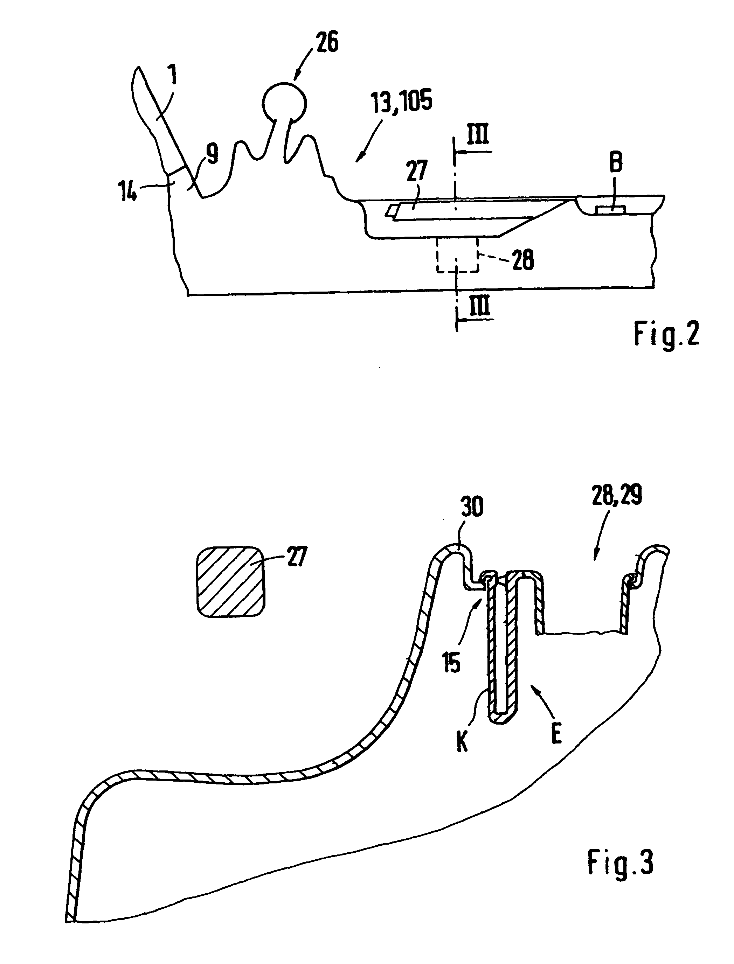

Das Innenausstattungsteil 6 kann durch ein Bedienteil 10 einer Audioanlage oder eines Bordcomputers oder dgl. gebildet sein. Das Innenausstattungsteil 7 kann beispielsweise ein Bedienelement 11, insbesondere für ein Heizungs-/Klimagerät, sein; das Innenausstattungsteil 8 ist als Ablagefach 12 und das Innenausstattungsteil 9 als Verbindungsteil zu einer zwischen zwei hier nicht wiedergegebenen Fahrzeugsitzen angeordneten Mittelkonsole 13 (Fig. 2) ausgebildet oder es grenzt an die Mittelkonsole 13 an.

Die Innenausstattung 4 kann aus den Innenausstattungsteilen modulartig zusammensetzbar sein. Eines der Innenausstattungsteile 6, 7, 8 oder 9 ist zu einem angrenzenden anderen Innenausstattungsteil 6, 7, 8 oder 9 mit geringen Abstand angeordnet, so dass ein Spalt 15 zwischen den Innenausstattungsteilen vorliegt und somit ein Zwischenraum 16 gebildet wird, in den ein Aufnahmeelement 17 für zumindest einen flächigen Gegenstand 18 einsetzbar ist. Das Aufnahmeelement 17 besitzt eine Einführöffnung 19 für den Gegenstand 18. Die Einführöffnung 19 liegt vorzugsweise in Griffreichweite eines Insassen in dem Fahrgastraum 3. Der, insbesondere karten- bzw. streifenartige, flächige Gegenstand 18 besitzt - im Vergleich zu seiner flächengröße - eine geringe Dicke D und ist beispielsweise eine Tank- oder Kreditkarte, ein Parkschein, eine Straßenkarte oder ein Inspektionsheft des Fahrzeugs oder dgl. Damit der Gegenstand sicher, jedoch entnehmbar in einem Aufnahmeraum 20 gehalten wird, besitzt dieser ein Halteelement 21. Das Halteelement 21 ist elastisch federnd als Spannclip 131 ausgebildet, so dass es den Gegenstand 18 gegen eine Innenwandung W des Aufnahmeraums 20 drückt und diesen Gegenstand somit klemmend hält. Der Aufnahmeraum 20 ist von einem in den Zwischenraum 16 einbringbaren Einsetzteil E umgeben, das als Kasten K realisierbar ist, der das Aufnahmeelement 17 bilden kann. Das Einsetzteil E bzw. der Kasten K ist an wenigstens einer Seite offen und bildet so die Einführöffnung 19. Nicht erfindungsgemäss wird der Aufnahmeraum 20 mit seiner Einführöffnung von dem randoffenen Zwischenraum 16 gebildet. Die Innenwandung W des Aufnahmeraums 20 sind in diesem nicht erfindungsgemässen Fall die Begrenzungswände Bw der benachbarten Innenausstattungsteile 7 und 8. Das Halteelement 21 kann dann an einer dieser Begrenzungswände Bw befestigt sein.

Das Halteelement 21 wird bei einem bevorzugtem Ausführungsbeispiel durch einen Reibbelag 22 gebildet, der an der Innenwandung W im Bereich der Einführöffnung 19 liegt. Der Reibbelag kann punktförmig oder streifenförmig vorliegen und an der Einführöffnung wenigstens bereichsweise umlaufen. Er wird vorzugsweise als Gummilippe realisiert.

Die Tiefe T des Aufnahmeraums 20 ist vorzugsweise so bemessen, dass darin flächige Gegenstände im üblichen Kartenformat lediglich teilweise aufgenommen werden, so dass der Gegenstand 18 etwas aus der Einführöffnung 19 hervorsteht, wie dies in Fig. 1 deutlich zu sehen ist. Die quer zur Tiefe T gemessen Breite des Aufnahmeraums 20 ist vorzugsweise an das übliche Kartenformat angepasst.

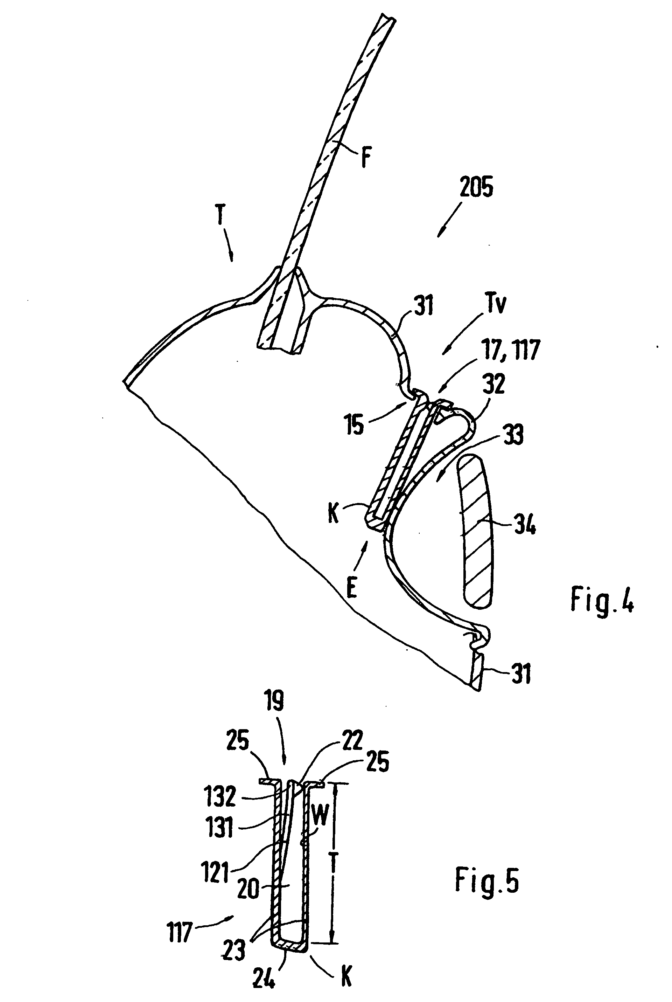

Wie Fig. 5 zeigt, kann der Reibbelag 22 jedoch auch an einem Halteelement 121 angeordnet sein, welches der erfindungsgemässen stegartigen bzw. streifenartigen Spannclip 131 aufweist, der elastisch federnd ausgebildet ist und an seinem freien Ende 132 den Reibbelag 22 trägt Das freie Ende 132 liegt erfindungsgemäss im Bereich der Einführöffnung 19. Der Spannclip 131 drückt den Reibbelag 22 somit auf den Gegenstand 18. Der Reibbelag kann zusätzlich oder alternativ an der Innenwandung W liegen. Der Spannclip drückt dann den Gegenstand an den Reibbelag. Der Spannclip und der Kasten K können einstückig hergestellt sein.

Das Einsetzteil E bzw. der Kasten K besitzt die Innenwandung W bildende Seitenwände 23 sowie einen Boden 24. Am freien Ende zumindest einer Seitenwand 23 kann ein von der Einführöffnung 19 weggerichtet verlaufender Verkleidungsabschnitt 25 ausgehen, der nach dem Einsetzten in den Zwischenraum 16 des als Einsetzteil E ausbildbaren Aufnahmeelements 17 bzw. 117 mit dem Innenausstattungsteil 6, 7, 8, bzw. 9 bündig abschließt oder das Innenausstattungsteil etwas überlappt.

An der in Fig. 2 wiedergegebenen Mittelkonsole 13 kann eine Getriebeschalteinrichtung 26 und ein Betätigungselement 27 für eine handbetätigbare Feststellbremse angeordnet sein. Die eine Innenausstattungsvorrichtung 105 bildende Mittelkonsole 13 weist ferner ein Ablagefach 28 auf, welches neben dem Betätigungsmittel 27 angeordnet sein kann, wie dies insbesondere aus Fig. 3 ersichtlich ist. Das Ablagefach 28 bildet ein Innenausstattungsteil 29 der Innenausstattungsvorrichtung 105. Ein weiteres Innenausstattungsteil 30 ist das Gehäuse der Mittelkonsole 13. Zwischen den Innenausstattungsteilen 29 und 30 liegt der Spalt 15, in den zumindest eines der Aufnahmeelemente 17 bzw. 117 einsetzbar ist.

Ein weiteres Ausführungsbeispiel einer Innenausstattungsvorrichtung 205 zeigt Fig. 4. Diese bildet die Türinnenverkleidung Tv und kann als Innenausstattungsteil 31 eine Innenabdeckung der Tür und als daran angrenzendes bzw. darin eingesetztes Innenausstattungsteil 32 eine Griffmulde 33 aufweisen, in der eine Betätigungsvorrichtung 34 für die Türöffnung angeordnet ist. Zwischen den Innenausstattungsteilen 31 und 32 ist der Spalt 15 gebildet, in den zumindest eines der Aufnahmeelemente 117 bzw. 17 einbringbar ist. Der Aufnahmeraum 20 ist mithin im Bereich des Türöffners 34 angeordnet, so dass ein Insasse beim Öffnen der Tür von Innen auf einen möglicherweise in dem Aufnahmeraum 20 angeordneten flächigen Gegenstand 18 aufmerksam wird. Denkbar wäre es allerdings auch, das Aufnahmeelement 17 bzw. 117 zwischen einem Betätigungselement B (Fig. 2) für das Fenster F (Fig. 4) und dem Innenausstattungsteil 29 anzuordnen, wobei das Betätigungselement B beispielsweise ein elektrischer Schalter eines Fensterhebers sein kann. Dieser Schalter wäre alternativ an der Türinnenverkleidung Tv anbringbar.

## Patentansprüche

1. Innenausstattungsvorrichtung (5) für ein Fahrzeug, insbesondere Kraftfahrzeug, mit mehreren benachbarten Innenausstattungsteilen (6, 7, 8, 9, 29, 30) und mit einem eine Einführöffnung (19) aufweisenden Aufnahmeraum (20) in einem Aufnahmeelement (17, 117) für wenigstens einen, insbesondere karten- und/oder streifenartigen, flächigen Gegenstand (18), wobei das Aufnahmeelement (17, 117) in einem Spalt (15) angeordnet ist, der zwischen den Innenausstattungsteilen (6, 7, 8, 9, 29, 30) vorliegt, welches Aufnahmeelement (17, 117) als ein in den Spalt (15) einbringbares Einsetzteil (E) ausgebildet ist, das die Einführöffnung (19) aufweist, **dadurch gekennzeichnet, dass** das Ausnahmeelement (117) ein Halteelement (21, 121) besitzt, das den flächigen Gegenstand (18) klemmend hält, dass das Halteelement (121) einen Spannclip (131) umfasst, der elastisch federnd den Gegenstand (18) gegen eine Innenhandung (W) des Aufnahmeraumes (20) druckt und in dem Aufnahmeraum (20) hält, und dass der Spannclip (131) ein freies Ende (132) besitzt, welches der Einführöffnung (19) zugewandt ist und dass der Spannclip (131) steg- bzw. streifenartig ausgeführt ist.

2. Innenausstattungsvorrichtung nach Anspruch 1, **dadurch gekennzeichnet, dass** das Halteelement (121) einen Reibbelag (22) aufweist.

3. Innenausstattungsvorrichtung nach Anspruch 2, **dadurch gekennzeichnet, dass** der Reibbelag (22) elastisch verformbar ist.

4. Innenausstattungsvorrichtung nach Anspruch 1, **dadurch gekennzeichnet, dass** im Bereich der Einführöffnung (19) bereichsweise oder umlaufend ein Reibbelag (22) angeordnet ist.

5. Innenausstattungsvorrichtung nach einem der vorhergehenden Ansprüche 2 bis 4, **dadurch gekennzeichnet, dass** der Reibbelag (22) durch eine Gummilippe gebildet ist.

6. Innenausstattungsvorrichtung nach Anspruch 1, **dadurch gekennzeichnet, dass** an dem freien Ende (132) des Spannclips (131) ein Reibbelag (22) ausgebildet ist.

7. Innenausstattungsvorrichtung nach einem der vorhergehenden Ansprüche, **dadurch gekennzeichnet, dass** diese eine zwischen zwei Sitzen angeordnete Mittelkonsole (13) der Innenausstattung (4) des Fahrzeugs oder einen Teil der Mittelkonsole (13) bildet.

8. Innenausstattungsvorrichtung nach einem der vorhergehenden Ansprüche 1 bis 6, **dadurch gekennzeichnet, dass** diese eine Türinnenverkleidung (Tv) des Fahrzeugs oder einen Teil der Türverkleidung bildet und dass das Aufnahmeelement (117) im Bereich eines Türöffners (34) oder eines Fensterbetätigungsmittels (B) angeordnet ist.

9. Innenausstattungsvorrichtung nach einem der vorhergehenden Ansprüche 1 bis 6, **dadurch gekennzeichnet, dass** diese Bestandteil einer Armaturentafel (2) des Fahrzeugs ist und vorzugsweise ein Mittelteil (1) der Armaturentafel (2) bildet.

10. Innenausstattungsvorrichtung nach Anspruch 1, **dadurch gekennzeichnet, dass** das Einsetzteil (E) als ein an wenigstens einer Seite offener Kasten (K) ausgebildet ist und so die Einführöffnung (19) aufweist.

11. Innenausstattungsvorrichtung nach Anspruch 1 und 10, **dadurch gekennzeichnet, dass** der Kasten (K) und der Spannclip (131) einstückig hergestellt sind.

## Claims

1. An interior-fitting device (5) for a vehicle, in particular a motor vehicle, with a plurality of adjacent interior-fitting parts (6, 7, 8, 9, 29, 30) and with a receiving space (20), comprising an insertion opening (19), in a receiving element (17, 117) for at least one flat article (18), in particular in the form of a card and/or strip, wherein the receiving element (17, 117) is arranged in a gap (15) which is present between the interior-fitting parts (6, 7, 8, 9, 29, 30), which receiving element (17, 117) is designed in the form of an insert part (**E**) which can be introduced into the gap (15) and which comprises the insertion opening (19), **characterized in that** the exceptional element [*sic - recte* receiving element] (117) has a holding element (21, 121) which holds the flat article (18) in a clamped manner, the holding element (121) comprises a clamping clip (131) which presses the article (18) against an inner wall (W) of the receiving space (20) in a resiliently springing manner and holds it in the receiving space (20), and the clamping clip (131) has a free end (132) which faces the insertion opening (19), and the clamping clip (131) is constructed in the form of a web or strip.

2. An interior-fitting device according to Claim 1, **characterized in that** the holding element (121) has a friction lining (22).

3. An interior-fitting device according to Claim 2, **characterized in that** the friction lining (22) is resiliently deformable.

4. An interior-fitting device according to Claim 1, **characterized in that** a friction lining (22) is arranged in the region of the insertion opening (19) in a local or continuous manner.

5. An interior-fitting device according to one of the preceding Claims 2 to 4, **characterized in that** the friction lining (22) is formed by a rubber lip.

6. An interior-fitting device according to Claim 1, **characterized in that** a friction lining (22) is formed on the free end (132) of the clamping clip (131).

7. An interior-fitting device according to one of the preceding Claims, **characterized in that** it forms a centre console (13), arranged between two seats, of the interior fitting (4) of the vehicle or part of the centre console (13).

8. An interior-fitting device according to one of the preceding Claims 1 to 6, **characterized in that** it forms an inner door lining (Tv) of the vehicle or part of the door lining, and the receiving element (117) is arranged in the region of a door-lock handle (34) or a window-actuating means (B).

9. An interior-fitting device according to one of the preceding Claims 1 to 6, **characterized in that** it is a constituent part of a dashboard (2) of the vehicle and preferably forms a central part (1) of the dashboard (2).

10. An interior-fitting device according to Claim 1, **characterized in that** the insert part (E) is constructed in the form of a box (K) open on at least one side and thus comprises the insertion opening (19).

11. An interior-fitting device according to Claim 1 and 10, **characterized in that** the box (**K**) and the clamping clip (131) are produced in one piece.

## Revendications

1. Dispositif d'équipement intérieur (5) pour un véhicule, en particulier un véhicule automobile, comportant plusieurs éléments d'équipement intérieur (6, 7, 8, 9, 29, 30) et un logement (20), muni d'une ouverture d'introduction (19), dans un élément de réception (17, 117) pour au moins un objet (18) plat, en particulier en forme de carte et/ou de bande, l'élément de réception (17, 117) étant agencé dans une fente (15), située entre les éléments d'équipement intérieur (6, 7, 8, 9, 29, 30), lequel élément de réception (17, 117) est conçu sous forme d'élément à insérer (E), qui est apte à être inséré dans la fente (15) et qui comporte l'ouverture d'introduction (19), **caractérisé en ce que** l'élément de réception (117) comporte un élément de retenue (21, 121) par lequel l'objet (18) plat est maintenu serré, **en ce que** l'élément de retenue (121) comporte une agrafe de serrage (131) qui, à la manière d'un ressort, pousse l'objet (18) contre une paroi intérieure (W) du logement (20) et le maintient dans le logement (20), et **en ce que** l'agrafe de serrage (131) a une extrémité libre (132) qui est orientée vers l'ouverture d'introduction (19) et **en ce que** l'agrafe de serrage (131) est conçue en forme de languette ou de patte.

2. Dispositif d'équipement intérieur selon la revendication 1, **caractérisé en ce que** l'élément de retenue (121) est muni d'une garniture anti-glissement (22).

3. Dispositif d'équipement intérieur selon la revendication 2, **caractérisé en ce que** la garniture anti-glissement (22) est élastiquement déformable.

4. Dispositif d'équipement intérieur selon la revendication 1, **caractérisé en ce qu'**une garniture anti-glissement (22) est agencée par zones ou sur tout le pourtour dans la zone de l'ouverture d'introduction (19).

5. Dispositif d'équipement intérieur selon l'une quelconque des revendications précédentes 2 à 4, **caractérisé en ce que** la garniture anti-glissement (22) est formée par une lèvre en caoutchouc.

6. Dispositif d'équipement intérieur selon la revendication 1, **caractérisé en ce qu'**une garniture anti-glissement (22) est réalisée sur l'extrémité libre (132) de l'agrafe de serrage (131).

7. Dispositif d'équipement intérieur selon l'une quelconque des revendications précédentes, **caractérisé en ce que** ledit dispositif forme une console centrale (13) de l'équipement intérieur (4) du véhicule, agencée entre deux sièges, ou forme une partie de la console centrale (13).

8. Dispositif d'équipement intérieur selon l'une quelconque des revendications précédentes 1 à 6, **caractérisé en ce que** ledit dispositif forme une garniture intérieure de porte (Tv) du véhicule ou une partie d'une garniture de porte, et **en ce que** l'élément de réception (117) est agencé dans la zone d'une poignée de porte (34) ou d'un moyen d'actionnement des vitres (B).

9. Dispositif d'équipement intérieur selon l'une quelconque des revendications précédentes 1 à 6, **caractérisé en ce que** ledit dispositif est une partie intégrante d'un tableau de bord (2) du véhicule et, de préférence, un élément central (1) du tableau de bord (2).

10. Dispositif d'équipement intérieur selon la revendication 1, **caractérisé en ce que** l'élément à insérer (E) est conçu sous forme de casier (K) ouvert sur un côté et comporte ainsi l'ouverture d'introduction (19).

11. Dispositif d'équipement intérieur selon les revendications 1 et 10, **caractérisé en ce que** le casier (K) et l'agrafe de serrage (131) sont réalisés d'un seul tenant.
